# EUROPÄISCHE PATENTSCHRIFT

(11) **EP 1 658 146 B1**
(45) Veröffentlichungstag und Bekanntmachung des Hinweises auf die Patenterteilung: **17.04.2013**
(21) Anmeldenummer: 04763419.1
(22) Anmeldetag: 23.07.2004
(51) Int. Cl.: C08F 290/06, B05D 7/00, B05D 7/16

(54) **VERFAHREN ZUR HERSTELLUNG FARB- UND/ODER EFFEKTGEBENDER MEHRSCHICHTLACKIERUNGEN**
METHOD FOR PRODUCING CHROMOPHORE AND/OR EFFECT-PRODUCING MULTILAYER VARNISHES
PROCEDE DE REALISATION DE REVETEMENTS EN VERNIS MULTICOUCHES COLORANTS ET/OU DONNANT UN EFFET

(30) Priorität: 27.08.2003 DE 10339305; 11.06.2004 DE 102004028368
(43) Veröffentlichungstag der Anmeldung: 24.05.2006
(73) Patentinhaber: BASF Coatings GmbH, 48165 Münster (DE)
(72) Erfinder: KLOPPENBORG, Patricia, 48565 Steinfurt (DE); STACHE, Frank, 48308 Senden (DE); WEGNER, Egon, 48268 Greven (DE); RICHERT, Michael, 48282 Emsdetten (DE)
(74) Vertreter: Leifert & Steffan
(86) Internationale Anmeldenummer: PCT/EP2004/008226
(87) Internationale Veröffentlichungsnummer: WO 2005/021168

(56) Entgegenhaltungen:
- DE-A- 10 124 277
- DE-A- 10 124 576
- DE-A- 10 311 476
- DE-A- 19 948 004

## Beschreibung

### Gebiet der Erfindung

Die vorliegende Erfindung betrifft ein neues Verfahren zur Herstellung farb- und/oder effektgebender Mehrschichtlackierungen. Außerdem betrifft die vorliegende Erfindung die mit Hilfe des neuen Verfahrens hergestellten farb- und/oder effektgebenden Mehrschichtlackierungen und ihre Verwendung.

### Stand der Technik

Moderne Personenkraftwagen, insbesondere Personenkraftwagen der Oberklasse, weisen farb- und/oder effektgebende Mehrschichtlackierungen auf. Bekanntermaßen umfassen diese eine Elektrotauchlackierung, eine Füllerlackierung, Steinschlagschutzgrundierung oder Funktionsschicht, eine farb- und/oder effektgebende Basislackierung und eine Klarlackierung. Die Mehrschichtlackierungen werden mit Hilfe so genannter Nass-in-nass-Verfahren hergestellt, bei denen man auf eine getrocknete, indes nicht gehärtete Basislackschicht eine Klarlackschicht appliziert, wonach man zumindest Basislackschicht und Klarlackschicht gemeinsam thermisch härtet. In dieses Verfahren kann auch die Herstellung der Elektrotauchlackierung und der Füllerlackierung, Steinschlagschutzgrundierung oder Funktionsschicht einbezogen werden.

Die farb- und/oder effektgebenden Mehrschichtlackierungen weisen bekanntermaßen die so genannte Automobilqualität auf. Gemäß dem europäischen Patent EP 0 352 298 B 1, Seite 15, Zeile 42, bis Seite 17, Zeile 14, bedeutet dies, dass die betreffenden Mehrschichtlackierungen
(1) einen hohen Glanz,
(2) eine hohe Abbildungsunterscheidbarkeit (DOI, distinctiveness of the reflected image),
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit
aufweisen. Dabei sind die Füllerlackierungen, Steinschlagschutzgrundierungen oder Funktionsschichten entscheidend für so wesentliche technologische Eigenschaften wie Schlagfestigkeit und Glätte und Verlauf der Gesamtlackierung. An die Qualität der Füllerlackierungen, Steinschlagschutzgrundierungen oder Funktionsschichten werden deshalb besonders hohe Anforderungen gestellt.

Aber auch an die technologischen Eigenschaften der Beschichtungsstoffe, aus denen diese Füllerlackierungen, Steinschlagschutzgrundierungen oder Funktionsschichten hergestellt werden, werden besondere Anforderungen gestellt. Zunächst einmal müssen sie die Füllerlackierungen, Steinschlagschutzgrundierungen oder Funktionsschichten in der erforderlichen Qualität problemlos und hervorragend reproduzierbar liefern. Sie müssen aber auch in einfacher und hervorragend reproduzierbarer Weise herstellbar sein.

Nicht zuletzt müssen sie auch noch in der Linie beim Automobilhersteller mit Hilfe moderner Applikationsmethoden in vergleichsweise hohen Nassschichtdicken ohne Lackstörungen applizierbar sein, um Trockenschichtdicken von 35 µm und mehr zu erzielen. Diese hohen Trockenschichtdicken, die für die einwandfreie technologische Funktion der Füllerlackierungen, Steinschlagschutzgrundierungen oder Funktionsschichten notwendig sind, sind aber ein schwerwiegender Nachteil, denn sie bringen vergleichsweise hohe Rohstoff- und Energiekosten mit sich.

Die Automobilindustrie ist daher bestrebt, die Trockenschichtdicken der Füllerlackierungen, Steinschlagschutzgrundierungen oder Funktionsschichten zu verringern, um die Rohstoff- und Energiekosten zu senken, ohne dass es hierbei zu einer Verschlechterung des anwendungstechnischen Eigenschaftsprofils der Mehrschichtlackierungen, insbesondere zu einer Verschlechterung der UV-Stabilität, kommt.

Zur Lösung dieser Probleme hat das aus der deutschen Patentanmeldung DE 44 38 504 A 1 bekannte Verfahren einen wichtigen Beitrag geleistet. Bei dem Verfahren wird ein Substrat mit einem Elektrotauchlack beschichtet. Die resultierende Elektrotauchlackschicht wird eingebrannt. Die resultierende Elektrotauchlackierung wird mit einem ersten, physikalisch oder thermisch härtbaren, wässrigen Basislack beschichtet. Die resultierende erste Basislackschicht wird, ohne sie zuvor vollständig zu härten, mit einem zweiten, thermisch härtbaren, wässrigen Basislack beschichtet. Die resultierende zweite Basislackschicht wird, ohne sie zuvor vollständig zu härten, mit einem Klarlack beschichtet, wodurch eine Klarlackschicht resultiert. Anschließend werden die erste und zweite Basislackschicht und die Klarlackschicht gemeinsam eingebrannt.

Der erste, physikalisch oder thermisch härtbare, wässrigen Basislack enthält als Bindemittel mindestens ein wasserverdünnbares Polyurethanharz mit einer Säurezahl von 10 bis 60 mg KOH/g und einem zahlenmittleren Molekulargewicht von 4.000 bis 25.000 Dalton, das durch Umsetzung
- mindestens eines Polyols, ausgewählt aus der Gruppe, bestehend aus Polyester- und Polyetherpolyolen mit einem zahlenmittleren Molekulargewicht von 400 bis 5.000, und
- mindestens eines Polyisocyanats sowie gegebenenfalls
- mindestens einer Verbindung, enthaltend mindestens eine isocyanatreaktive funktionelle Gruppe und mindestens eine (potenziell) anionische Gruppe im Molekül,
- mindestens einer Verbindung, enthaltend mindestens eine isocyanatreaktive funktionelle Gruppe und mindestens eine Poly(oxyalkylen)gruppe im Molekül und
- mindestens einer Verbindung eines zahlenmittleren Molekulargewichts von 60 bis 600 Dalton, enthaltend Hydroxyl- und/oder Aminogruppen im Molekül
und Neutralisation des resultierenden Reaktionsprodukts herstellbar ist. Der erste Basislack kann unter anderem Titandioxid als Pigment und Talkum als Füllstoff enthalten. Der erste Basislack liefert eine erste Basislackierung oder Funktionsschicht, die bei Trockenschichtdicken < 35 µm, vorzugsweise < 15 µm, die herkömmlichen Füllerlackierungen, Steinschlagschutzgrundierungen oder Funktionsschichten ohne Verlust von wesentlichen technologischen Eigenschaften der Mehrschichtlackierungen zu ersetzen vermag.

Das bekannte Verfahren hat aber der Nachteil, dass der hierbei verwendete erste Basislack noch nicht die Lagerstabilität aufweist, die für die besonders wirtschaftliche Durchführung des Verfahrens wünschenswert wäre. Es ist daher notwendig, den ersten Basislack erst kurz vor seiner Applikation herzustellen, um Mehrschichtlackierungen mit sehr guten anwendungstechnischen Eigenschaften zu erhalten. Außerdem stellt der erste Basislack sozusagen eine Sonderanfertigung dar und kann deshalb nicht ohne weiteres auf der Basis des zweiten Basislacks bereitgestellt werden. Des Weiteren hat es sich in wenigen Fällen gezeigt, dass die UV-Stabilität der betreffenden Mehrschichtlackierungen nicht mehr in vollem Umfang gewährleistet ist, weil die bekannte erste Basislackierung vergleichsweise viel UV-Strahlung zur Elektrotauchlackierung durchlässt, was unter Umständen zu Haftungsproblemen führt. Zwar tritt dieses Problem nur in wenigen Fällen nach langer Exposition zum Sonnenlicht auf, es ist dennoch wünschenswert, dieses Problem ganz zu vermeiden.

(Co)Polymerisate oder Pfropfmischpolymerisate, die durch (Co)Polymerisation von einem mindestens eine (co)polymerisierbare, olefinisch ungesättigte Gruppe enthaltenden Monomeren oder von mindestens zwei Comonomeren in der Gegenwart mindestens eines Polyurethans, ausgewählt aus der Gruppe, bestehend aus Polyurethanen, die keine copolymerisierbaren, olefinisch ungesättigten Gruppen enthalten, und Polyurethanen, die mindestens eine seitenständige und/oder mindestens eine endständige copolymerisierbare, olefinisch ungesättigte Gruppe enthalten, sowie gegebenenfalls partielle oder vollständige Neutralisation herstellbar sind, sind aus den deutschen Patentanmeldungen DE 44 37 535 A 1, DE 199 48 004 A 1 oder DE 100 39 262 A1, den europäischen Patentanmeldungen EP 0 522 419 A 1 oder EP 0 522 420 A2 oder der internationalen Patentanmeldung WO98/54266 A 1 bekannt. Diese Pfropfmischpolymerisate werden insbesondere als Bindemittel in wässrigen Basislacken eingesetzt, die der Herstellung von farb- und/oder effektgebenden Basislackierungen oder Unidecklackierungen von Mehrschichtlackierungen dienen.

Üblicherweise werden dabei die wässrigen Basislacke im Rahmen eines Nass-in-nass-Verfahrens verarbeitet. Dieses kann die folgenden Verfahrensschritte umfassen:
(I) Herstellen einer Füllerlackschicht durch Applikation eines Füllers auf das Substrat,
(II) Trocknung der Füllerlackschicht,
(III) Herstellen einer Basislackschicht durch Applikation eines Wasserbasislacks auf die Füllerlackschicht,
(IV) Trocknen der Basislackschicht,
(V) Herstellen einer Klarlackschicht durch Applikation eines Klarlacks auf die Basislackschicht und
(VI) gemeinsame Härtung der Füllerlackschicht, der Basislackschicht und der Klarlackschicht, wodurch der Füller, die Basislackierung und die Klarlackierung resultieren
(vgl. z. B. die deutsche Patentanmeldung DE 19 48 004 A 1, Seite. 17, Zeilen 59 bis 69).

Nähere Angaben über die eingesetzten Füllerlackierungen, Steinschlagschutzgrundierungen oder Funktionsschichten fehlen. So wird in der deutschen Patentanmeldung DE 199 48 004 A 1 auf Seite 22, Zeilen 18 bis 20, oder in der deutschen Patentanmeldung DE 100 39 262 A1 auf Seite 20, Zeilen 17 bis 20, lediglich angegeben, dass als Füller der handelsübliche wässrige Füller Ecoprime® der Firma BASF Coatings AG Verwendung findet.

Im Allgemeinen weisen die bekannten wässrigen Basislacke eine gute Lagerstabilität auf. Ihre Verwendung zur Herstellung von Basislacken, die in einer Mehrschichtlackierung die üblichen und bekannten Füllerlackierungen, Steinschlagschutzgrundierungen oder Funktionsschichten ersetzen können, geht aus den vorstehend aufgeführten Patentanmeldungen aber nicht hervor.

### Die Aufgabe der Erfindung

Aufgabe der vorliegenden Erfindung ist es, ein neues Verfahren zur Herstellung farb- und/oder effektgebender Mehrschichtlackierungen auf Substraten, umfassend, in dieser Reihenfolge übereinander liegend,
(A) mindestens eine erste farb- und/oder effektgebende Lackierung,
(B) mindestens eine zweite farb- und/oder effektgebende Lackierung und
(C) mindestens eine transparente Lackierung,
durch sukzessive Applikation mindestens eines physikalisch oder thermisch härtbaren, wässrigen Beschichtungsstoffs (A), mindestens eines thermisch härtbaren, wässrigen Beschichtungsstoffs (B) und mindestens eines Beschichtungsstoffs (C) auf ein
(i) ungrundiertes Substrat,
(ii) mit mindestens einer nicht oder nur partiell gehärteten Grundierung (G) beschichtetes Substrat oder
(iii) mit mindestens einer vollständig gehärteten Grundierung (G) beschichtetes Substrat
und gemeinsame Härtung
(1) der resultierenden Nassschichten (A), (B) und (C) oder
(2) (A), (B) und (C) und der oder den nicht oder nur partiell gehärteten Grundierung(en) (G)
bereitzustellen, das die Nachteile des Standes der Technik nicht mehr länger aufweist, sondern bei dem der eingesetzte erste, physikalisch oder thermisch härtbare, wässrige Basislack (A) nicht nur eine höhere Lagerstabilität, sondern auch eine verbesserte Stabilität unter Scherbelastung, insbesondere eine höhere Ringleitungsstabilität, aufweist. Der bei dem neuen Verfahren eingesetzte erste, physikalisch oder thermisch härtbare, wässrige Basislack (A) soll in einfacher Weise auf der Basis handelsüblicher, wässriger Basislacke bereitgestellt werden können und erste farb- und/oder effektgebende Basislackierungen (A) liefern, die selbst in einer Schichtdicke < 15 µm herkömmliche Füllerlackierungen, Steinschlagschutzgrundierungen oder Funktionsschichten in vollem Umfang ersetzen können, ohne dass die anwendungstechnischen Eigenschaften der Mehrschichtlackierungen, insbesondere der Steinschlagschutz und die UV-Stabilität auch nach Langzeitexposition, nachteilig beeinflusst werden. Dabei soll das neue Verfahren in bereits vorhandenen Anlagen für die Applikation von Basislacken durch elektrostatische Spritzapplikation und pneumatische Applikation durchgeführt werden können, ohne dass hierfür Umbauten notwendig werden. Darüber hinaus soll wegen des neuen Verfahrens in neu zu errichtenden Lackieranlagen völlig auf eine Anlage zu Applikation von Füllern verzichtet werden können.

### Die erfindungsgemäße Lösung

Demgemäß wurde das neue Verfahren zur Herstellung farb- und/oder effektgebender Mehrschichtlackierungen auf Substraten, umfassend, in dieser Reihenfolge übereinander liegend,
(A) mindestens eine erste farb- und/oder effektgebende Lackierung,
(B) mindestens eine zweite farb- und/oder effektgebende Lackierung und
(C) mindestens eine transparente Lackierung,
durch sukzessive Applikation mindestens eines physikalisch oder thermisch härtbaren, wässrigen Beschichtungsstoffs (A), mindestens eines thermisch härtbaren, wässrigen Beschichtungsstoffs (B) und mindestens eines Beschichtungsstoffs (C) auf ein
(i) ungrundiertes Substrat,
(ii) mit mindestens einer nicht oder nur partiell gehärteten Grundierung (G) beschichtetes Substrat oder
(iii) mit mindestens einer vollständig gehärteten Grundierung (G) beschichtetes Substrat
und gemeinsame Härtung
(1) der resultierenden Nassschichten (A), (B) und (C) oder
(2) (A), (B) und (C) und der oder den nicht oder nur partiell gehärteten Grundierung(en) (G)
gefunden, bei dem der Beschichtungsstoff (A)
(a.1) mindestens ein (Co)Polymerisat oder Pfropfmischpolymerisat, herstellbar durch (Co)Polymerisation von einem mindestens eine (co)polymerisierbare, olefinisch ungesättigte Gruppe enthaltenden Monomeren (a.1.1) oder mindestens zwei Comonomeren (a.1.1) in der Gegenwart mindestens eines Polyurethans (a.1.2), ausgewählt aus der Gruppe, bestehend aus Polyurethanen, die keine copolymerisierbaren, olefinisch ungesättigten Gruppen enthalten, und Polyurethanen, die mindestens eine seitenständige und/oder mindestens eine endständige copolymerisierbare, olefinisch ungesättigte Gruppe enthalten, sowie gegebenenfalls partielle oder vollständige Neutralisation,
(a.2) mindestens ein farb-und/oder effektgebendes Pigment,
(a.3) mindestens ein UV-Strahlung absorbierendes Pigment und
(a.4) Talkum
enthält.

Im Folgenden wird das neue Verfahren zur Herstellung von farb- und/oder effektgebenden Mehrschichtlackierungen auf Substraten als »erfindungsgemäßes Verfahren« bezeichnet.

### Die Vorteile des erfindungsgemäßen Verfahrens

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Verfahrens gelöst werden konnte. Insbesondere war es überraschend, dass der erfindungsgemäß eingesetzte erste, physikalisch oder thermisch härtbare, wässrige Basislack (A) nicht nur eine höhere Lagerstabilität, sondern auch eine verbesserte Stabilität unter Scherbelastung, insbesondere eine höhere Ringleitungsstabilität, aufwies. Der erfindungsgemäß eingesetzte erste, physikalisch oder thermisch härtbare, wässrige Basislack (A) konnte in einfacher Weise auf der Basis handelsüblicher, wässriger Basislacke bereitgestellt werden und lieferte und erste, farb- und/oder effektgebende Basislackierungen (A), die selbst in einer Schichtdicke < 15 µm herkömmliche Füllerlackierungen, Steinschlagschutzgrundierungen oder Funktionsschichten in vollem Umfang ersetzen konnten, ohne dass die anwendungstechnischen Eigenschaften der Mehrschichtlackierungen, insbesondere der Steinschlagschutz und die UV-Stabilität auch nach Langzeitexposition, nachteilig beeinflusst wurden. Dabei konnte das erfindungsgemäße Verfahren in bereits vorhandenen Anlagen für die Applikation von Basislacken durch elektrostatische Spritzapplikation und pneumatische Spritzapplikation durchgeführt werden, ohne dass hierfür Umbauten notwendig wurden. Darüber hinaus konnte wegen des erfindungsgemäßen Verfahrens in neu zu errichtenden Lackieranlagen völlig auf eine Anlage zur Applikation von Füllern verzichtet werden.

### Ausführliche Beschreibung des erfindungsgemäßen Verfahrens

Das erfindungsgemäße Verfahren dient der Herstellung von farb- und/oder effektgebenden Mehrschichtlackierungen auf den unterschiedlichsten Substraten.

Bekanntermaßen umfassen diese Mehrschichtlackierungen, in dieser Reihenfolge übereinander liegend,
(A) mindestens eine erste farb- und/oder effektgebende Lackierung,
(B) mindestens eine zweite farb- und/oder effektgebende Lackierung und
(C) mindestens eine transparente Lackierung.
Bekanntermaßen werden sie durch sukzessive Applikation mindestens eines physikalisch oder thermisch härtbaren, wässrigen Beschichtungsstoffs (A), mindestens eines thermisch härtbaren, wässrigen Beschichtungsstoffs (B) und mindestens eines Beschichtungsstoffs (C) auf ein
(i) ungrundiertes Substrat,
(ii) mit mindestens einer nicht oder nur partiell gehärteten Grundierung (G) beschichtetes Substrat oder
(iii) mit mindestens einer vollständig gehärteten Grundierung (G) beschichtetes Substrat
und gemeinsame Härtung
(1) der resultierenden Nassschichten (A), (B) und (C) oder
(2) (A), (B) und (C) und der oder den nicht oder nur partiell gehärteten Grundierung(en) (G)
hergestellt. Verfahren dieser Art sind beispielsweise aus der deutschen Patentanmeldung DE 44 38 504 A 1, Seite 4, Zeile 62, bis Seite 5, Zeile 20, und Seite 5, Zeile 59, bis Seite 6, Zeile 9, sowie aus der deutschen Patentanmeldung DE 199 48 004 A 1, Seite 17, Zeile 59, bis Seite 19, Zeile 22, und Seite 22, Zeilen 13 bis 31, i. V. m. Tabelle 1, Seite 21, bekannt.

Für das erfindungsgemäße Verfahren ist es wesentlich, dass der eingesetzte, physikalisch oder thermisch härtbare, wässrige Basislack (A) als wesentlichen Bestandteil mindestens ein, insbesondere ein, (Co)Polymerisat oder Pfropfmischpolymerisate (a.1) enthält.

Im Rahmen der vorliegenden Erfindung ist unter einem (Co)Polymerisat (a.1) ein Homopolymerisat oder ein Copolymerisat zu verstehen, das aus mindestens einem Monomeren (a.1.1) in der Gegenwart des Polyurethans (a.1.2) vorzugsweise durch die thermisch initiierte radikalische (Co)Polymerisation hergestellt worden ist, dessen Polymer- oder Copolymerketten aber überwiegend nicht mit den Polymerhauptketten des Polyurethans (a.1.2) durch kovalente Bindungen verknüpft sind. »Überwiegend« bedeutet hier, das mehr als 50% und bis zu 100% der vorhandenen Polymer- oder Copolymerketten nicht mit den Polymerhauptketten des Polyurethans (a.1.2) verknüpft sind.

Demgegenüber ist im Rahmen der vorliegenden Erfindung unter einem Pfropfmischpolymerisat (a.1) ein Homopolymerisat oder ein Copolymerisat zu verstehen, das aus mindestens einem Monomeren (a.1.1) in der Gegenwart des Polyurethans (a.1.2) vorzugsweise durch die thermisch initiierte radikalische (Co)Polymerisation hergestellt worden ist und dessen Polymer- oder Copolymerketten überwiegend mit den Polymerhauptketten des Polyurethans (a.1.2) durch kovalente Bindungen verknüpft sind. »Überwiegend« bedeutet hier, dass mehr als 50% und bis zu 100% der vorhandenen Polymer- oder Copolymerketten mit den Polymerhauptketten des Polyurethans (a.1.2) verknüpft sind.

Das (Co)Polymerisat oder Pfropfmischpolymerisat ist herstellbar durch (Co)Polymerisation von einem mindestens eine (co)polymerisierbare, olefinisch ungesättigte Gruppe enthaltenden Monomeren (a.1.1) oder von mindestens zwei Comonomeren (a.1.1) in der Gegenwart mindestens eines Polyurethans (a.1.2), ausgewählt aus der Gruppe, bestehend aus Polyurethanen, die keine copolymerisierbaren, olefinisch ungesättigten Gruppen enthalten, und Polyurethanen, die mindestens eine seitenständige und/oder mindestens eine endständige copolymerisierbare, olefinisch ungesättigte Gruppe enthalten, sowie gegebenenfalls partielle oder vollständige Neutralisation.

Vorzugsweise werden die Polyurethane (a.1.2), die keine copolymerisierbaren, olefinisch ungesättigten Gruppen enthalten, für die Herstellung der (Co)Polymerisate (a.1) verwendet.

Vorzugsweise werden die Polyurethane (a.1.2), die mindestens eine seitenständige und/oder mindestens eine endständige copolymerisierbare, olefinisch ungesättigte Gruppe enthalten, für die Herstellung der Pfropfmischpolymerisate (a.1) verwendet.

Bevorzugt werden bei dem erfindungsgemäßen Verfahren die Pfropfmischpolymerisate (a.1) eingesetzt.

Vorzugsweise wird die (Co)Polymerisation oder Pfropfmischpolymerisation in organischer Lösung oder in wässriger Dispersion, insbesondere in wässriger Dispersion, durchgeführt. Vorzugsweise werden dabei (Co)Monomere (a.1.1), die säuregruppenfrei sind, eingesetzt. Bevorzugt werden die (co)polymerisierbaren, olefinisch ungesättigten Gruppen der (Co)Monomeren (a.1.1) aus der Gruppe, bestehend aus (Meth)Acrylat-, Ethacrylat-, Crotonat-, Cinnamat-, Vinyl-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Vinyl-, Allyl- oder Butenylethergruppen oder Dicyclopentadienyl-, Norbornenyl-, Isoprenyl-, Isopropenyl-, Vinyl-, Allyl- oder Butenylestergruppen; ausgewählt. Insbesondere handelt es sich um (Meth)Acrylatgruppen. Geeignete (Co)Monomere (a.1.1) sind beispielsweise aus der deutschen Patentanmeldung DE 199 48 004 A 1, Zeile 11, Zeile 30, bis Seite 12, Zeile 60, bekannt.

Vorzugsweise werden die copolymerisierbaren, olefinisch ungesättigten Gruppen des Polyurethans (a.1.2) aus der Gruppe, bestehend aus (Meth)Acrylat-, Ethacrylat-, Crotonat-, Cinnamat-, Vinyl-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Vinyl-, Allyl- oder Butenylethergruppen oder Dicyclopentadienyl-, Norbornenyl-, Isoprenyl-, Isopropenyl-, Vinyl-, Allyl- oder Butenylestergruppen; ausgewählt. Bevorzugt handelt es sich um Vinylgruppen. Insbesondere sind die Vinylgruppen in Ethenylarylengruppen enthalten.

Die Herstellung der (Co)Polymerisate (a.1) ist an sich bekannt und wird beispielsweise in der deutschen Patentanmeldung DE 44 37 535 A1, Seite 2, Zeile 27, bis Seite 6, Zeile 22, im Einzelnen beschrieben.

Die Herstellung der Pfropfmischpolymerisate (a.1) ist ebenfalls an sich bekannt und wird beispielsweise in den Patentanmeldungen - W
- WO 98/54266 A 1, Seite 3, Zeile 28, bis Seite 4, Zeile 21, Seite 5, Zeile 14, Seite 6, Zeile 6, Seite 6, Zeile 8, bis Seite 7, Zeile 3, Seite 7, Zeile 25, bis Seite 22, Zeile 13, Seite 22, Zeile 19, bis Seite 29, Seite 32, Zeile 10, bis Seite 33, Zeile 9, »Beispiel 1: wässrige Dispersion der Bindemittelkomponente a)«, und Seite 33, Zeile 12, bis Seite 34, Zeile 10, »Beispiel 2: wässrige Dispersion der Bindemittelkomponente b)«;
- EP 0 522 419 A 1, Spalte 1, Zeilen 27 bis 48, Spalte 1, Zeile 49, bis Spalte 2, Zeile 13, Spalte 2, Zeile 14 bis 41, Spalte 2, Zeile 42 bis 56, Spalte 2, Zeile 57, bis Spalte 8, Zeile 57, Spalte 8, Zeile 58, bis Spalte 9, Zeile 55, Spalte 10, Zeile 5, bis Spalte 12, Zeile 53, sowie Spalte 14, Zeile 42, bis Spalte 17, Zeile 11;
- EP 0 522 420 A 2, Spalte 1, Zeile 19, bis Spalte 8, Zeile 7, Spalte 8, Zeile 15,bis Spalte 9, Zeile 38, sowie Spalte 11, Zeile 28, Spalte 14, Zeile 10;
- DE 100 39 262 A 1, Seite 4, Absatz [0027], bis Seite 9, Absatz [0101], Seite 9, Absatz [0107], bis Seite 12, Absatz [0129], Seite 17, Absatz [0193], und Seite 18, Absatz [0194]; und
- DE 199 48 004 A 1, S. 4 Zeile 19, bis Seite 10, Zeile 38, Seite 10, Zeile 42, bis Seite 13, Zeile 48, Seite 19, Zeilen 44 bis 54, »Herstellbeispiel 1 - Die Herstellung eines erfindungsgemäß zu verwendenden Adduktes (B2)«, Seite 19, Zeile 56, bis Seite 20, Zeile 7, »Beispiel 1 - Die Herstellung eines erfindungsgemäßen Polyurethans (B)«, und wenn Seite 20, Zeilen 9 bis 21, »Beispiel 2 - Die Herstellung der Primärdispersion eines erfindungsgemäßen Pfropfmischpolymerisats 1«.

Im Detail beschrieben sind. Insbesondere werden die in der deutschen Patentanmeldung DE 199 48 004 A 1 im Detail beschriebenen Pfropfmischpolymerisate 1 und 2, insbesondere die Pfropfmischpolymerisate 1, die einen hydrophoben Kern aus mindestens einem einpolymerisierten olefinisch ungesättigten Monomeren und eine hydrophile Schale aus mindestens einem hydrophilen Polyurethan umfassen, als Pfropfmischpolymerisate (a.1) eingesetzt (vgl. DE 199 48 004 A1 auf Seite 10, Zeilen 42 bis 57 i. V. m. Seite 4, Zeilen 12 bis 18).

Demnach wird das in dem erfindungsgemäßen Verfahren zu verwendende Polyurethan vorzugsweise hergestellt, indem man
(1) mindestens ein Polyurethanpräpolymer (a.1.2.1), das mindestens eine freie Isocyanatgruppe enthält, mit
(2) mindestens einem Addukt (a.1.2.2) umsetzt, das erhältlich ist, indem man mindestens ein Ethenylarylenmonoisocyanat und mindestens eine Verbindung, enthaltend mindestens zwei isocyanatreaktive funktionelle Gruppen,
so miteinander umsetzt, dass mindestens eine isocyanatreaktive funktionelle Gruppe im Addukt (a.1.2.2) verbleibt.

Vorzugsweise wird die isocyanatreaktive funktionelle Gruppe aus der Gruppe, bestehend aus Hydroxylgruppen, Thiolgruppen und primären und sekundären Aminogruppen, ausgewählt.

Bevorzugt weist das Ethenylarylenmonoisocyanat die allgemeine Formel I auf:

**CH₂=C(R)-A-X-NCO** **(I),**

worin die Variablen die folgende Bedeutung haben:
- A =: substituierter oder unsubstituierter C₆-C₂₀-Arylenrest;
- R =: Wasserstoffatom, ein Halogenatom, eine Nitrilgruppe, eine substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest; und
- X =: zweibindiger organischer Rest.

Bevorzugt ist der Arylenrest A 1,2-, 1,3- und/oder 1,4-Phenylen, insbesondere 1,3-Phenylen.

Bevorzugt steht R für ein Wasserstoffatom oder eine Methylgruppe, insbesondere eine Methylgruppe.

Bevorzugt bezeichnet der zweibindige organische Rest X einen verzweigten oder unverzweigten C₃-C₆-Alkandiylrest.

Bevorzugt ist der zweibindige organische Rest X -C(CH₃)₂-.

Insbesondere ist das Ethenylarylenmonoisocyanat I oder mindestens eines der Ethenylarylenmonoisocyanate I 1-(1-Isocyanato-1-methylethyl)-3-(1-methylethenyl)-benzol.

Insbesondere enthält das Polyurethan (a.1.2) hydrophile funktionelle Gruppen, insbesondere Carbonsäuregruppen und/oder Carboxylatgruppen.

(vgl. im Einzelnen DE 199 48 004 A 1: Seite 6, Zeile 34, bis Seite 7, Zeile 48, Seite 8, Zeile 5, bis Seite 9, Zeile 40).

Bevorzugt wird die Pfropfmischpolymerisation, wie in DE 199 48 004 A 1, Seite 12, Zeile 62, bis Seite 13, Zeile 48, beschrieben, durchgeführt.

Zur Verwendung in dem erfindungsgemäß einzusetzenden, wässrigen Basislack (A) wird das (Co)Polymerisat oder Pfropfmischpolymerisat (a.1), insbesondere das Pfropfmischpolymerisat (a.1), partiell oder vollständig neutralisiert, wodurch ein Teil oder alle der potenziell anionischen Gruppen, d. h. der Säuregruppen, in anionische Gruppe umgewandelt werden. Geeignete Neutralisationsmittel sind aus der DE 44 37 535 A 1, Seite 6, Zeilen 7 bis 16, oder der DE 199 48 004 A 1, Seite DE 199 48 004 A 1, Seite 7, Zeilen 4 bis 8, bekannt.

Der Gehalt des erfindungsgemäß einzusetzenden wässrigen Basislacks (A) an (Co)Polymerisat oder Pfropfmischpolymerisat (a.1) kann sehr breit variieren und richtet sich nach den Erfordernissen des Einzelfalls. Vorzugsweise liegt der Gehalt von (A) an (a.1), bezogen auf den Festkörper von (A), bei 5 bis 50 Gew.-%, insbesondere 10 bis 40 Gew.-%.

Der erfindungsgemäß einzusetzende, wässrige Basislack (A) enthält mindestens ein farb- und/oder effektgebendes Pigment (a.2). Vorzugsweise wird das Pigment (a.2) aus der Gruppe, bestehend aus organischen und anorganischen, farbgebenden, optisch effektgebenden, farb- und optisch effektgebenden, magnetisch abschirmenden, elektrisch leitfähigen, korrosionshemmenden, fluoreszierenden und phosphoreszierenden Pigmenten, insbesondere aus der Gruppe, bestehend aus organischen und anorganischen, farbgebenden, optisch effektgebenden, farb- und optisch effektgebenden Pigmenten, ausgewählt.

Beispiele geeigneter Effektpigmente, die auch farbgebend sein können, sind Metallplättchenpigmente, wie handelsübliche Aluminiumbronzen, gemäß DE 36 36 183 A 1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmenten«, Seite 52, »Azomethin-Pigmente«, »Azopigmente«, und Seite 379, »MetallkomplexPigmente«, verwiesen.

Beispiele für fluoreszierende und phosphoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele geeigneter korrosionshemmender Pigmente sind Bleisilikate, Zinkphosphate oder Zinkborate.

Der Gehalt des wässrigen Basislacks (A) an den Pigmenten (a.2) kann sehr breit variieren und richtet sich in erster Linie nach der Intensität der Effekte, insbesondere der optischen Effekte, und/oder dem Buntton, der oder die eingestellt werden soll oder sollen.

Erfindungsgemäß enthält der wässrige Basislack (A) mindestens ein UV-Strahlung absorbierendes Pigment (a.3), insbesondere zwei UV-Strahlung absorbierende Pigmente (a.3).

Vorzugsweise werden die UV-Strahlung absorbierenden Pigmente (a.3) aus der Gruppe, bestehend aus Titandioxid-Pigmenten und Russ-Pigmenten, ausgewählt. Bevorzugt werden mindestens ein Titandioxid-Pigment (a.3) und mindestens ein Russ-Pigment (a.3) verwendet.

Der Gehalt von (A) an Titandioxid- und/oder Russ-Pigment (a.3) kann sehr breit variieren und richtet sich nach den Erfordernissen des Einzelfalls, insbesondere nach dem Grad der Transmission der UV-Strahlung, der durch die Pigmente (a.2) in den Basislackierungen (A) und (B) hervorgerufen wird.

Vorzugsweise liegt der Gehalt von (A) an Titandioxid-Pigment (a.3), bezogen auf den Festkörper von (A), bei 0,1 bis 5 Gew.-%, insbesondere 0,5 bis 3 Gew.-%.

Vorzugsweise liegt der Gehalt von (A) an Russ-Pigment (a.3), bezogen auf den Festkörper von (A), bei 0,001 bis 2 Gew.-%, insbesondere 0,01 bis 1 Gew.-%.

Erfindungsgemäß enthält der wässrige Basislack (A) mindestens ein, insbesondere ein, Talkum-Pigment (a.4). Der Gehalt von (A) an Talkum (a.4) kann sehr breit variieren und richtet sich nach den Erfordernissen des Einzelfalls. Vorzugsweise liegt der Gehalt von (A) an (a.4), bezogen auf den Festkörper von (A), bei 0,1 bis 5 Gew.-%, insbesondere 0,5 bis 3 Gew.-%.

Darüber hinaus kann der erfindungsgemäß einzusetzende, wässrige Basislack (A) mindestens einen üblichen und bekannten Zusatzstoff (a.5) in wirksamen Mengen enthalten. Vorzugsweise wird der Zusatzstoff (a.5) oder werden die Zusatzstoffe (a.5) aus der Gruppe, bestehend aus Vernetzungsmitteln; von den (Co)Polymerisaten oder Pfropfmischpolymerisaten (a.1) verschiedenen, oligomeren und polymeren Bindemitteln, inklusive der Polyurethane, die in den Schriften, die nachstehend im Zusammenhang mit den wässrigen Basislacken (B) aufgeführt werden, beschrieben werden; von den Pigmenten (a.2) bis (a.4) verschiedenen, organischen und anorganischen, bunten und unbunten, transparenten, opaken, organischen und anorganischen Pigmenten, Füllstoffen und Nanopartikeln; organischen Lösemitteln; Trockenstoffen; Antiabsetzmitteln; UV-Absorbern; Lichtschutzmitteln; Radikalfängern; Entlüftungsmitteln; Slipadditiven; Polymerisationsinhibitoren; Entschäumern; Emulgatoren; Netzmitteln; Haftvermittlern; Verlaufmitteln; Filmbildehilfsmitteln; rheologiesteuernden Additiven und Flammschutzmitteln; ausgewählt.

Beispiele geeigneter Zusatzstoffe (a.5) werden in der deutschen Patentanmeldung DE 199 48 004 A 1, Seite 14, Zeile 32, bis Seite 17, Zeile 5, beschrieben.

Methodisch weist die Herstellung des erfindungsgemäß einzusetzenden, wässrigen Basislacks (A) keine Besonderheiten auf, sondern erfolgt vorzugsweise durch das Vermischen der vorstehend beschriebenen Bestandteile und Homogenisieren der resultierenden Mischungen mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer.

Zwar kann der wässrige Basislack (A) mit Hilfe aller üblichen und bekannten Methoden zur Applikation von flüssigen Beschichtungsstoffen appliziert werden, für das erfindungsgemäße Verfahren ist es aber von Vorteil, wenn er mit Hilfe der elektrostatischen Spritzapplikation (ESTA), vorzugsweise mit Hochrotationsglocken, appliziert wird. Vorzugsweise wird er in einer Nassschichtdicke appliziert, dass nach der Härtung der resultierenden Basislackschicht (A) eine Trockenschichtdicke von 6 bis 30 µm, insbesondere 8 bis 25 µm, resultiert.

Bei dem erfindungsgemäßen Verfahren wird die wässrige Basislackschicht (A) sofort mit dem thermisch härtbaren, wässrigen Beschichtungsstoff (B) beschichtet. Oder sie wird zuerst abgelüftet oder getrocknet, dabei aber nicht oder nur partiell gehärtet, und anschließend mit dem thermisch härtbaren, wässrigen Beschichtungsstoff (B) beschichtet.

Vorzugsweise handelt es sich bei dem thermisch härtbaren, wässrigen Beschichtungsstoff (B) einen üblichen und bekannten wässrigen Basislack, wie er beispielsweise aus dem amerikanischen Patent US 5,114,789 A, Spalte 7, Zeile 41, bis Spalte 8, Zeile 33, Spalte 11, Zeilen 24 bis 50, und Spalte 13, Zeilen 30 bis 40, dem europäischen Patent EP 0 352 298 B 1, Seite 9, Zeile 19, bis Seite 12, Zeile 38, oder den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A1, EP 0 574 417 A1, EP 0 531 510 A1, EP 0 581 211 A 1, EP 0 708 788 A 1, EP 0 593 454 A 1, DE 43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A1, WO 97/49745, WO 97/49747, EP 0 401 565 A 1, EP 0 496 205 A 1, EP 0 358 979 A 1, EP 469 389 A 1, DE 24 46 442 A 1, DE 34 09 080 A 1, DE 195 47 944 A 1, DE 197 41 554 A 1 oder EP 0 817 684, Spalte 5, Zeilen 31 bis 45, bekannt ist.

Insbesondere wird ein wässrige Basislack (B) verwendet, der bis auf den Gehalt an Titandioxid und Talkum im Wesentlichen oder völlig identisch ist mit dem erfindungsgemäß einzusetzenden wässrigen Basislack (A). Dies stellt einen besonderen Vorteil des erfindungsgemäßen Verfahrens dar, weil der wässrige Basislack (A) in diesem Falle in einfacher Weise durch Zugabe von Titandioxid und Talkum zu dem wässrigen Basislack (B) hergestellt werden kann.

Zwar kann der wässrige Basislack (B) mit Hilfe aller üblichen und bekannten Methoden zur Applikation von flüssigen Beschichtungsstoffen appliziert werden, für das erfindungsgemäße Verfahren ist es aber von Vorteil, wenn er mit Hilfe der pneumatischen Spritzapplikation appliziert wird. Vorzugsweise wird er in einer Nassschichtdicke appliziert, dass nach den Härtung der resultierenden Basislackschicht (A) eine Trockenschichtdicke von 4 bis 25 µm, insbesondere 6 bis 20 µm, resultiert.

Bei dem erfindungsgemäßen Verfahren wird die wässrige Basislackschicht (B) sofort mit dem Beschichtungsstoff (C) beschichtet. Oder sie wird zuerst abgelüftet oder getrocknet, dabei aber nicht oder nur partiell gehärtet, und anschließend mit dem Beschichtungsstoff (C) beschichtet.

Vorzugsweise werden die wässrigen Basislacke (A) und (B) mit einer Nassschichtdicke appliziert, dass nach der Härtung eine Trockenschichtdicke (A + B) von insgesamt 10 bis 40 µm, insbesondere 12 bis 35 µm, resultiert.

Bei dem Beschichtungsstoff (C) handelt es sich um einen transparenten, insbesondere optisch klaren, thermisch und/oder mit aktinischer Strahlung härtbaren Beschichtungsstoff, insbesondere einen Klarlack.

Unter aktinischer Strahlung wird elektromagnetische Strahlung, wie nahes Infrarot (NIR), sichtbares Licht, UV-Strahlung, Röntgenstrahlung, und Gammastrahlung, insbesondere UV-Strahlung, und Korpuskularstrahlung, wie Elektronenstrahlung, Betastrahlung, Protonenstrahlung, Neutronenstrahlung und Alphastrahlung, insbesondere Elektronenstrahlung, verstanden.

Als Klarlacke (C) kommen alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Thermisch härtbare Einkomponenten(1K)-, Zweikomponenten(2K)- oder Mehrkomponenten(3K, 4K)-Klarlacke (C) sind aus den Patentanmeldungen DE 42 04 518 A 1, EP 0 594 068 A 1, EP 0 594 071 A 1, EP 0 594 142 A 1, EP 0 604 992 A 1 oder EP 0 596 460 A 1 den internationalen Patentanmeldungen WO 94/10211, WO 94/10212, WO 94/10213, WO 94/22969 oder WO 92/22615 oder den amerikanischen Patentschriften US 5,474,811 A, US 5,356,669 A oder US 5,605,965 A bekannt.

Einkomponenten(1K)-Klarlacke (C) enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. die amerikanischen Patentschriften US 5,474,811 A, US 5,356,669 A oder US 5,605,965 A 1, die internationalen Patentanmeldungen WO 94/10211, WO 94/10212 oder WO 94/10213 oder die europäischen Patentanmeldungen EP 0 594 068 A 1, EP 0 594 071 A 1 oder EP 0 594 142 A 1).

Zweikomponenten(2K)- oder Mehrkomponenten(3K, 4K)-Klarlacke (B.2) enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Thermisch härtbare Pulverklarlacke (C) sind beispielsweise aus der deutschen Patentanmeldung DE 42 22 194 A 1, der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, bekannt.

Pulverklarlacke (C) enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke (C) sind aus der US-Patentschrift US 4,268,542 A 1 und den Patentanmeldungen DE 195 40 977 A 1, DE 195 18 392 A 1, DE 196 17 086 A 1, DE 196 13 547 A 1, EP 0 652 264 A 1, DE 196 18 657 A 1, DE 196 52 813 A 1, DE 196 17 086 A 1 oder DE 198 14 471 A 1 bekannt.

Pulverslurry-Klarlacke (C) enthalten bekanntermaßen Pulverklarlacke (B.2) in einem wäßrigen Medium dispergiert.

Mit aktinischer Strahlung härtbare Klarlacke, Pulverklarlacke und Pulverslurry-Klarlacke (C) gehen beispielsweise aus den europäischen Patentanmeldungen EP 0 928 800 A 1, EP 0 636 669 A 1, EP 0 410 242 A 1, EP 0 783 534 A1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 199 17 965 A 1, DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A hervor.

Thermisch und mit aktinischer Strahlung härtbare Klarlacke, Pulverklarlacke und Pulverslurry-Klarlacke (C) gehen beispielsweise aus den Patentanmeldungen DE 198 18 735 A 1, WO 98/40170, DE 199 08 013 A 1, DE 199 08 018 A 1, EP 0 844 286 A 1 oder EP 0 928 800 A 1 hervor.

Vorzugsweise werden thermisch härtbare oder thermisch und mit aktinischer Strahlung härtbare Klarlacke (C) verwendet.

Der für das erfindungsgemäße Verfahren ausgewählte Klarlack (C) wird mit Hilfe der üblichen und bekannten Applikationsverfahren, die an den Aggregatzustand (flüssig oder pulverförmig) des Klarlacks (C) angepasst sind, appliziert.

Die Beschichtungsstoffe (A), (B) und (C) können auf
(i) ungrundierte Substrate,
(ii) mit mindestens einer, insbesondere einer, nicht oder nur partiell gehärteten Grundierung (G) beschichtete Substrate oder
(iii) mit mindestens einer, insbesondere einer, vollständig gehärteten Grundierung (G) beschichtete Substrate
appliziert werden.

Die Substrate können aus den unterschiedlichsten Materialien und Kombinationen von Materialien aufgebaut sein. Vorzugsweise bestehen sie aus Metallen, Kunststoffen, Glas, Holz, Leder, Textil, Keramik oder Naturstein, bevorzugt aus Metallen, Kunststoffen und Glas, insbesondere aus Metallen und Kunststoffen.

Die Substrate können die unterschiedlichsten Verwendungszwecke haben. Vorzugsweise handelt es sich bei den Substraten um Karosserien von Fortbewegungsmitteln, inklusive Wasserfahrzeuge, Schienenfahrzeuge, Fluggeräte, mit Muskelkraft betriebene Fahrzeuge und Kraftfahrzeuge, insbesondere PKW, Motorräder, Lastwagen und Omnibusse, und Teile hiervon; Bauwerke und Teile hiervon; Türen, Fenster; Möbel; industrielle Kleinteile; mechanische, optische und elektronische Bauteile; Coils, Container; Emballagen, Glashohlkörper und Gegenstände des täglichen Bedarfs.

Insbesondere handelt es sich bei den Substraten um Karosserien von PKW und Teilen hiervon.

Vorzugsweise sind die Karosserien mit einer Grundierung (G) versehen.

Bestehen die Karosserien aus Stahl werden übliche und bekannte Elektrotauchlackierungen als Grundierungen (G) verwendet. Die Elektrotauchlackierungen (G) werden in üblicher und bekannter Weise aus elektrophorethisch, insbesondere kathodisch, abscheidbaren Elektrotauchlacken hergestellt. Die resultierenden Elektrotauchlackschichten (G) können vor der Applikation des wässrigen Basislacks (A) thermisch gehärtet werden. Sie können aber auch lediglich getrocknet und dabei nicht oder nur partiell gehärtet werden, wonach sie gemeinsam mit den übrigen Schichten (A), (B) und (C) gehärtet werden.

Bestehen die Karosserien aus Aluminium werden durch anodische Oxidation erzeugte Aluminiumoxidschichten als Grundierungen (G) verwendet, die als solche nicht mehr weiter gehärtet werden müssen.

Bestehen Teile der Karosserien, d. h. so genannte Anbauteile, aus Kunststoffen, werden diese vorzugsweise mit einer üblichen und bekannten Hydrogrundierung (G) versehen, oder die Haftungseigenschaften ihrer Oberfläche werden mit Hilfe chemischer und/oder physikalischer Verfahren verbessert. Auch diesen Fällen müssen die Grundierungen (G) im Allgemeinen nicht gehärtet werden.

Bei dem erfindungsgemäßen Verfahren werden die applizierten Schichten (A), (B) und (C) gemeinsam thermisch gehärtet. Sofern der Klarlack (C) auch noch mit aktinischer Strahlung härtbar ist, erfolgt noch eine Nachhärtung durch Bestrahlung mit aktinischer Strahlung. Sofern die gegebenenfalls verwendete Grundierung (G) noch nicht gehärtet ist, wird sie in diesem Verfahrenschritt mit ausgehärtet.

Die Aushärtung kann nach einer gewissen Ruhezeit erfolgen. Sie kann eine Dauer von 30 Sekunden bis 2 Stunden, vorzugsweise 1 Minute bis 1 Stunde und insbesondere 1 bis 45 Minuten haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte < 10 g Wasser/kg Luft, insbesondere < 5 g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Besonders bevorzugt wird ein Verfahren angewandt, bei der der Bestandteil Wasser rasch aus den Nassschichten entfernt wird. Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben.

Vorteilhafterweise erfolgt die thermische Härtung bei einer Temperatur von 50 bis 170, besonders bevorzugt 60 bis 165 und insbesondere 80 bis 150 °C während einer Zeit von 1 Minute bis zu 2 Stunden, besonders bevorzugt 2 Minuten bis zu 1 Stunde und insbesondere 3 bis 30 Minuten.

Die thermische Härtung kann durch die Härtung mit aktinischer Strahlung, insbesondere mit UV-Strahlung, ergänzt werden. Dabei können die üblichen und bekannten Verfahren und Vorrichtungen angewandt werden, wie sie beispielsweise in der deutschen Patentanmeldung DE 199 20 799 A 1, Seite 11, Zeilen 5 bis 21, beschrieben werden.

Die resultierenden farb- und/oder effektgebenden Mehrschichtlackierungen sind von hervorragender Automobilqualität, sodass sie auch für die Lackierung von PKW der Oberklasse in Betracht kommen. Sie weisen eine hervorragende Steinschlagfestigkeit auf, die auch nach langer Exposition an Sonnenlicht nicht abnimmt.

### Beispiele und Vergleichsversuche

### Herstellbeispiel 1

### Die Herstellung eines eine Ethenylarylengruppe enthaltenden Adduktes (a.1.2.2)

In einem Reaktionsgefäß, ausgerüstet mit Rührer, Innenthermometer, Rückflußkühler und elektrischer Heizung, wurden 429 Gewichtsteile Methylethylketon, 182 Gewichtsteile N-Methylpyrrolidon und 210 Gewichtsteile Diethanolamin bei 20 °C vorgelegt. Zu dieser Mischung wurden während eineinhalb Stunden 402 Gewichtsteile 1-(1-Isocyanato-1-methylethyl)-3-(1-methylethenyl)-benzol (TMI® der Firma CYTEC) zugetropft, so dass die Reaktionstemperatur 40 °C nicht überschritt. Die resultierende Reaktionsmischung wurde so lange gerührt, bis keine freien Isocyanatgruppen mehr nachweisbar waren. Danach wurde sie mit 200 ppm Hydrochinon stabilisiert. Der Feststoffgehalt der Reaktionsmischung lag bei 50 Gew.-%.

### Herstellbeispiel 2

### Die Herstellung eines hydrophilen Polyurethans (a.1.2)

In einem Reaktionsgefäß, ausgerüstet mit Rührer, Innenthermometer, Rückflußkühler und elektrischer Heizung, wurden 664,4 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton und 89,4 Gewichtsteile Dimethylolpropionsäure in 342 Gewichtsteilen Methylethylketon und 52 Gewichtsteilen N-Methylpyrrolidon gelöst. Zu der resultierenden Lösung wurden bei 45 °C 296,2 Gewichtsteile Isophorondiisocyanat hinzugegeben. Nach dem Abklingen der exothermen Reaktion wurde die Reaktionsmischung unter Rühren langsam auf 80 °C erwärmt. Es wurde bei dieser Temperatur weiter gerührt, bis der Isocyanatgehalt 1,2 Gew.-% betrug und konstant war. Danach wurde die Reaktionsmischung auf 70 °C abgekühlt, und es wurden 248 Gewichtsteile des Adduktes (a.1.2.2) gemäß Herstellbeispiel 1 hinzugegeben. Die resultierende Reaktionsmischung wurde so lange bei 70 °C gerührt, bis keine freien Isocyanatgruppen mehr nachweisbar waren. Das resultierende gelöste Polyurethan (a.1.2) wurde mit 142 Gewichtsteilen Methoxypropanol und 57 Gewichtsteilen Triethylamin versetzt. 30 Minuten nach der Aminzugabe wurde die Temperatur der Lösung auf 60 °C gesenkt, wonach während 30 Minuten 1.791 Gewichtsteile deionisiertes Wasser unter Rühren hinzugegeben wurden. Aus der resultierenden Dispersion wurde das Methylethylketon bei 60 °C unter Vakuum abdestilliert. Hiernach wurden eventuelle Lösemittel- und Wasserverluste ausgeglichen. Die so erhaltene Dispersion des Polyurethans (a.1.2) wies einen Feststoffgehalt von 35,1 Gew.-% (eine Stunde bei 130 °C) und einen pH-Wert 7,3 auf.

### Herstellbeispiel 3

### Die Herstellung der Primärdispersion eines Pfropfmischpolymerisats (a.1)

1.495,7 Gewichtsteile der Polyurethandispersion (a.1.2) gemäß Herstellbeispiel 2 wurden mit 851,6 Gewichtsteilen deionisiertem Wasser verdünnt und auf 85 °C erhitzt. Bei dieser Temperatur wurde der Dispersion unter Rühren ein Gemisch aus 150,2 Gewichtsteilen Styrol, 150,2 Gewichtsteilen Methylmethacrylat, 112,4 Gewichtsteilen n-Butylacrylat und 112,4 Gewichtsteilen Hydroxyethylmethacrylat während 3,5 Stunden gleichmäßig zugegeben. Mit Beginn der Zugabe der Monomerenmischung wurde eine Lösung von 7,9 Gewichtsteilen tert.-Butylperoxyethylhexanoat in 115,5 Gewichtsteilen Methoxypropanol innerhalb von vier Stunden zugegeben. Die resultierende Reaktionsmischung wurde bei 85 °C so lange weiter gerührt, bis alle Monomeren abreagiert waren. Die resultierende Primärdispersion des Pfropfmischpolymerisats (a.1) wies eine sehr gute Lagerstabilität auf. Ihr Feststoffgehalt lag bei 34,9 Gew.-% (eine Stunde bei 130 °C) und ihr pH-Wert bei 7,2.

### Herstellbeispiel 4

### Die Herstellung eines wässrigen Basislacks (B)

Der wässrige Basislack (B) wurde unter Verwendung der Primärdispersion des Pfropfmischpolymerisats (a.1) gemäß Herstellbeispiel 3 nach der in der deutschen Patentanmeldung DE 199 48 004 A1, Seite 20, Zeilen 51, bis Seite 21, Zeilen 18, i. V. m. Tabelle 1, Seite 21, »Beispiel 3 und Vergleichsversuche V 2 und V3«, angegebenen Vorschrift hergestellt.

### Herstellbeispiel 5

### Die Herstellung eines wässrigen Basislacks (A)

Für die Herstellung des wässrigen Basislacks (A) wurden zunächst
- eine Talkum-Paste aus, bezogen auf die Paste, 30 Gew.-% Talkum und 70 Gew.-% der Primärdispersion des Pfropfmischpolymerisats (a.1) gemäß Herstellbeispiel 3,
- eine Titandioxid-Paste aus, bezogen auf die Paste, 50 Gew.-% Titandioxid und 50 Gew.-% der Primärdispersion des Pfropfmischpolymerisats (a.1) gemäß Herstellbeispiel 3, sowie
- eine Russ-Paste aus, bezogen auf die Paste, 10 Gew.-% Russ Monarch ® 1400 und 90 Gew.-% der Primärdispersion des Pfropfmischpolymerisats (a.1) gemäß Herstellbeispiel 3,
hergestellt.

Zu dem wässrigen Basislack (B) gemäß Herstellbeispiel 4 wurden 6 Gewichtsteile der Talkum-Paste, 6 Gewichtsteile der Titandioxid-Paste und 0,075 Gewichtsteile der Russ-Paste unter Rühren hinzu gegeben, wodurch der wässrige Basislack (A) resultierte.

### Beispiel 1 und Vergleichsversuche V 1 und V 2

### Die Herstellung von effektgebenden Mehrschichtlackierungen

Für das Beispiel 1 wurden der wässrige Basislack (A) des Herstellbeispiels 5, der wässrige Basislack (B) des Herstellbeispiels 4 und ein handelsüblicher Einkomponenten-Klarlack (C) der Firma BASF Coatings AG verwendet.

Für den Vergleichsversuch V 1 wurden nur der wässrige Basislack (B) des Herstellbeispiels 4 für die Herstellung der effektgebenden Schichten (A) und (B) und der handelsübliche Einkomponenten-Klarlack (C) der Firma BASF Coatings AG verwendet.

Für den Vergleichsversuch V 2 wurde ein handelsüblicher Einbrennfüller der Firma BASF Coatings AG, der wässrige Basislack (B) gemäß Herstellbeispiel 4 und der handelsübliche Einkomponenten-Klarlack (C) der Firma BASF Coatings AG verwendet.

Als Substrate wurden Prüftafeln aus Stahl der Abmessungen 20 x 20 cm, die mit einer üblichen und bekannten Elektrotauchlackierung einer Trockenschichtdicke von 20 µm beschichtet waren, verwendet.

Bei Beispiel 1 wurde zunächst der wässrige Basislack (A) gemäß Herstellbeispiel 5 durch elektrostatische Spritzapplikation (ESTA) in einer Nassschichtdicke aufgetragen, dass nach der Aushärtung eine Trockenschichtdicke von 10 µm resultierte. Die resultierende Basislackschicht (A) wurde während 4 Minuten abgelüftet und anschließend mit dem wässrigen Basislack (B) gemäß Herstellbeispiel 4 durch pneumatische Spritzapplikation in einer Nassschichtdicke beschichtet, dass nach der Aushärtung eine Trockenschichtdicke von 7 µm resultierte. Die Basislackschichten (A) und (B) wurden während 10 Minuten bei 80 °C getrocknet. Danach wurde der Klarlack (C) in einer Nassschichtdicke appliziert, dass nach der Aushärtung eine Trockenschichtdicke von 40 µm resultierte. Die Klarlackschicht (C) wurde während 5 Minuten abgelüftet. Anschließend wurden die Schichten (A), (B) und (C) in einem Umluftofen während 30 Minuten bei 130 °C eingebrannt.

Für den Vergleichsversuch V 1 wurde Beispiel 1 wiederholt, nur dass an Stelle des wässrigen Basislacks (A) gemäß Herstellbeispiel 5 der wässrige Basislack (B) gemäß Herstellbeispiel 4 verwendet wurde.

Für den Vergleichsversuch V 2 wurde Beispiel 1 wiederholt, nur dass an Stelle des wässrigen Basislacks (A) gemäß Herstellbeispiel 5 der handelsübliche Einbrennfüller verwendet wurde, der in einer Nassschichtdicke appliziert wurde, dass nach der Aushärtung eine Trockenschichtdicke von 30 µm resultierte, und der vor der Applikation des wässrigen Basislacks (B) gemäß Herstellbeispiel 4 während 20 Minuten bei 150 °C in einem Umluftofen eingebrannt wurde.

Die Steinschlagfestigkeit der resultierenden effektgebenden Mehrschichtlackierungen wurde mit Hilfe des VDA-Steinschlag-Tests und der DaimlerChrysler-Kugelschußprüfung ermittelt. Die Ergebnisse finden sich in der Tabelle 1. Sie untermauern, dass die wässrige Basislackierung (A) selbst bei einer Trockenschichtdicke von nur 10 µm eine Füllerlackierung einer Trockenschichtdicke von 30 µm in vollem Umfang ersetzen konnte.

**Tabelle 1: Steinschlagfestigkeit nach VDA und DaimlerChrysler**

| **Prüfung** | **Vergleichsversuche:** | | **Beispiel 1** |
|---|---|---|---|
| | **V1** | **V2** | |
| VDA^{a)} | 2/2 | 2/1 | 2/1 |
| Kugelschuss^{b)} | 4/5 | 7/1 | 6/1 |

| | | | |
|---|---|---|---|
| a) Sollwert: 2/1; 1. Wert = Abschlagfläche (mm²); 2. Wert = Durchschlagsfläche bis zum Substrat (mm²); b) Sollwert: 8/1; 1. Wert = Abschlagfläche (mm²); 2. Wert = Durchschlagsfläche bis zum Substrat (mm²). | | | |

### Beispiel 2 und Vergleichsversuche V 3 und V 4

### Die Herstellung von freitragenden, effektgebenden Mehrschichtlackierungen

Für Beispiel 2 wurde Beispiel 1 wiederholt.

Für den Vergleichsversuch V 3 wurde der Vergleichsversuch V 1 wiederholt.

Für den Vergleichsversuch V 4 wurde der Vergleichsversuch V 2 wiederholt.

Bei Beispiel 2 und den Vergleichsversuch V 3 und V 4 wurden an Stelle der Stahltafeln Stamylantafeln verwendet sodass die resultierenden effektgebenden Mehrschichtlackierungen als freitragende Filme vom Substrat abgelöst werden konnten. Die Transmission von UV-Strahlung (in %) der freitragenden Filme wurde ermittelt. Die Ergebnisse finden sich in der Tabelle 2. Sie untermauern, dass die wässrige Basislackierung (A) selbst bei einer Trockenschichtdicke von nur 10 µm eine Füllerlackierung einer Trockenschichtdicke von 30 µm auch hinsichtlich der Unterdrückung der Transmission von UV-Strahlung in vollem Umfang ersetzen konnte.

**Tabelle 2: Transmission von UV-Strahlung, gemessen an freitragenden Filmen**

| **UV-Strahlung:** | **Transmission (%):** | | |
|---|---|---|---|
| **Wellenlänge** | **Vergleichsversuche:** | | **Beispiel 2** |
| **(nm)** | **V3** | **V4** | |
| 290 bis 380^{a)} | 1,8 | 0 | 0,02 |
| 380 bis 400 ^{b)} | 4,0 | 0 | 0,04 |
| 400 bis 450 ^{c)} | 5,8 | 0 | 0,04 |

| | | | |
|---|---|---|---|
| a) Sollwert: < 0,2%; b) Sollwert: < 1,0%; c) Sollwert: < 2,0%. | | | |

## Patentansprüche

1. Verfahren zur Herstellung farb- und/oder effektgebender Mehrschichtlackierungen auf Substraten, umfassend, in dieser Reihenfolge übereinander liegend,
(A) mindestens eine erste farb- und/oder effektgebende Lackierung,
(B) mindestens eine zweite farb- und/oder effektgebende Lackierung und
(C) mindestens eine transparente Lackierung,
durch sukzessive Applikation mindestens eines physikalisch oder thermisch härtbaren, wässrigen Beschichtungsstoffs (A), mindestens eines thermisch härtbaren, wässrigen Beschichtungsstoffs (B) und mindestens eines Beschichtungsstoffs (C) auf ein
(i) ungrundiertes Substrat,
(ii) mit mindestens einer nicht oder nur partiell gehärteten Grundierung (G) beschichtetes Substrat oder
(iii) mit mindestens einer vollständig gehärteten Grundierung (G) beschichtetes Substrat
und gemeinsame Härtung
(1) der resultierenden Nassschichten (A), (B) und (C) oder
(2) (A), (B) und (C) und der oder den nicht oder nur partiell gehärteten Grundierung(en) (G),
**dadurch gekennzeichnet, dass** der Beschichtungsstoff (A)
(a.1) mindestens ein (Co)Polymerisat oder Pfropfmischpolymerisat, herstellbar durch (Co)Polymerisation von einem mindestens eine (co)polymerisierbare, olefinisch ungesättigte Gruppe enthaltenden Monomeren (a.1.1) oder mindestens zwei Comonomeren (a.1.1) in der Gegenwart mindestens eines Polyurethans (a.1.2), ausgewählt aus der Gruppe, bestehend aus Polyurethanen, die keine copolymerisierbaren, olefinisch ungesättigten Gruppen enthalten, und Polyurethanen, die mindestens eine seitenständige und/oder mindestens eine endständige copolymerisierbare, olefinisch ungesättigte Gruppe enthalten, sowie gegebenenfalls partielle oder vollständige Neutralisation,
(a.2) mindestens ein farb- und/oder effektgebendes Pigment,
(a.3) mindestens ein UV-Strahlung absorbierendes Pigment und
(a.4) Talkum
enthält.

2. Verfahren nach Anspruch 1, **dadurch gekennzeichnet, dass** die (co)polymerisierbaren, olefinisch ungesättigten Gruppen der (Co)Monomeren (a.1.1) aus der Gruppe, bestehend aus (Meth)Acrylat-, Ethacrylat-, Crotonat-, Cinnamat-, Vinyl-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Vinyl-, Allyl- oder Butenylethergruppen oder Dicyclopentadienyl-, Norbornenyl-, Isoprenyl-, Isopropenyl-, Vinyl-, Allyl- oder Butenylestergruppen; ausgewählt werden.

3. Verfahren nach einem der Ansprüche 1 oder 2, **dadurch gekennzeichnet, dass** das Polyurethan (a.1.2) mindestens eine seitenständige und/oder mindestens eine endständige copolymerisierbare, olefinisch ungesättigte Gruppe enthält.

4. Verfahren nach Anspruch 3, **dadurch gekennzeichnet, dass** die copolymerisierbaren, olefinisch ungesättigten Gruppen des Polyurethans (a.1.2) aus der Gruppe, bestehend aus (Meth)Acrylat-, Ethacrylat-, Crotonat-, Cinnamat-, Vinyl-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Vinyl-, Allyl- oder Butenylethergruppen oder Dicyclopentadienyl-, Norbornenyl-, Isoprenyl-, Isopropenyl-, Vinyl-, Allyl- oder Butenylestergruppen; ausgewählt werden.

5. Verfahren nach Anspruch 4, **dadurch gekennzeichnet, dass** die copolymerisierbaren, olefinisch ungesättigten Gruppen des Polyurethans (a.1.2) Vinylgruppen sind.

6. Verfahren nach Anspruch 5, **dadurch gekennzeichnet, dass** die Vinylgruppen des Polyurethans (a.1.2) in Ethenylarylengruppen enthalten sind.

7. Verfahren nach Anspruch 6, **dadurch gekennzeichnet, dass** das Polyurethan (a.1.2) herstellbar ist, indem man
(1) mindestens ein Polyurethanpräpolymer (a.1.2.1), das mindestens eine freie Isocyanatgruppe enthält, mit
(2) mindestens einem Addukt (a.1.2.2) umsetzt, das erhältlich ist, indem man mindestens ein Ethenylarylenmonoisocyanat und mindestens eine Verbindung, enthaltend mindestens zwei isocyanatreaktive funktionelle Gruppen,
so miteinander umsetzt, dass mindestens eine isocyanatreaktive funktionelle Gruppe im Addukt (a.1.2.2) verbleibt.

8. Verfahren nach Anspruch 7, **dadurch gekennzeichnet, dass** die isocyanatreaktive funktionelle Gruppe aus der Gruppe, bestehend aus Hydroxylgruppen, Thiolgruppen und primären und sekundären Aminogruppen, ausgewählt wird.

9. Verfahren nach Anspruch 7 oder 8, **dadurch gekennzeichnet, dass** das Ethenylarylenmonoisocyanat die allgemeine Formel I aufweist:
**CH₂=C(R)-A-X-NCO** **(I),**
worin die Variablen die folgende Bedeutung haben:
A = substituierter oder unsubstituierter C₆-C₂₀-Arylenrest;
R = Wasserstoffatom, ein Halogenatom, eine Nitrilgruppe, eine substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest; und
X = zweibindiger organischer Rest.

10. Verfahren nach Anspruch 9, **dadurch gekennzeichnet, dass** der Arylenrest A 1,2-, 1,3- und/oder 1,4-Phenylen, insbesondere 1,3-Phenylen, ist.

11. Verfahren nach einem der Ansprüche 1 bis 10, **dadurch gekennzeichnet, dass** das Polyurethan (a.1.2) hydrophile funktionelle Gruppen, insbesondere Carbonsäuregruppen und/oder Carboxylatgruppen, enthält.

12. Verfahren nach einem der Ansprüche 1 bis 11, **dadurch gekennzeichnet, dass** das farb- und/oder effektgebende Pigment (a.2) aus der Gruppe, bestehend aus organischen und anorganischen, farbgebenden, optisch effektgebenden, farb- und optisch effektgebenden, magnetisch abschirmenden, elektrisch leitfähigen, korrosionshemmenden, fluoreszierenden und phosphoreszierenden Pigmenten, ausgewählt wird.

13. Verfahren nach einem der Ansprüche 1 bis 12, **dadurch gekennzeichnet, dass** das die UV-Strahlung absorbierende Pigment (a.3) aus der Gruppe, bestehend aus Titandioxid-Pigmenten und Russ-Pigmenten ausgewählt wird.

14. Verfahren nach Anspruch 13, **dadurch gekennzeichnet, dass** der Beschichtungsstoff (A) ein Titandioxid-Pigment (a.3) und ein Russ-Pigment (a.3) enthält.

15. Verfahren nach einem der Ansprüche 1 bis 14, **dadurch gekennzeichnet, dass** der Beschichtungsstoff (A) mindestens einen Zusatzstoff (a.5) enthält.

16. Verfahren nach Anspruch 15, **dadurch gekennzeichnet, dass** der Zusatzstoff (a.5) aus der Gruppe, bestehend aus Vernetzungsmitteln, von den (Co)Polymerisaten und Pfropfmischpolymerisaten (a.1) verschiedenen, oligomeren und polymeren Bindemitteln, von den Pigmenten (a.2) bis (a.4) verschiedenen, organischen und anorganischen, bunten und unbunten, transparenten, opaken, organischen und anorganischen Pigmenten, Füllstoffen und Nanopartikeln, organischen Lösemitteln, Trockenstoffen, Antiabsetzmitteln, UV-Absorbern, Lichtschutzmitteln, Radikalfängern, Entlüftungsmitteln, Slipadditiven, Polymerisationsinhibitoren, Entschäumern, Emulgatoren, Netzmitteln, Haftvermittlern, Verlaufmitteln, Filmbildehilfsmitteln, rheologiesteuernden Additiven und Flammschutzmitteln; ausgewählt wird.

17. Verfahren nach einem der Ansprüche 1 bis 16, **dadurch gekennzeichnet, dass** die Beschichtungsstoffe (A) und (B) mit einer Nassschichtdicke appliziert werden, dass nach der Härtung eine Trockenschichtdicke (A + B) von insgesamt 10 bis 25 µm resultiert.

18. Verfahren nach einem der Ansprüche 1 bis 17, **dadurch gekennzeichnet, dass** der Beschichtungsstoff (A) in einer Nassschichtdicke appliziert wird, dass nach der Härtung eine Trockenschichtdicke von 8 bis 12 µm resultiert.

19. Verfahren nach einem der Ansprüche 1 bis 18, **dadurch gekennzeichnet, dass** der Beschichtungsstoff (B) mit einer Nassschichtdicke appliziert wird, dass nach der Härtung eine Trockenschichtdicke von 6 bis 10 µm resultiert.

20. Verfahren nach einem der Ansprüche 1 bis 19, **dadurch gekennzeichnet, dass** die Substrate Karosserien von Fortbewegungsmitteln und Teile hiervon, Bauwerke und Teile hiervon, Türen, Fenster, Möbel, industrielle Kleinteile, mechanische, optische und elektronische Bauteile, Coils, Container, Emballagen, Glashohlkörper und Gegenstände des täglichen Bedarfs sind.

## Claims

1. Process for producing multicoat color and/or effect paint systems on substrates, comprising - atop one another in this order -
(A) at least one first color and/or effect coat,
(B) at least one second color and/or effect coat, and
(C) at least one transparent coat,
by successively applying at least one physically or thermally curable aqueous coating material (A), at least one thermally curable aqueous coating material (B), and at least one coating material (C) to
(i) an unprimed substrate,
(ii) a substrate coated with at least one uncured or only part-cured primer (G) or
(iii) a substrate coated with at least one full-cured primer (G)
and jointly curing
(1) the resulting wet films (A), (B), and (C), or
(2) (A), (B), and (C) and the uncured or only part-cured primer(s) (G),
**characterized in that** the coating material (A) comprises
(a.1) at least one (co) polymer or graft copolymer preparable by (co)polymerizing a monomer (a.1.1) containing at least one (co)polymerizable, olefinically unsaturated group or at least two comonomers (a.1.1) in the presence of at least one polyurethane (a.1.2) selected from the group consisting of polyurethanes containing no copolymerizable, olefinically unsaturated groups and polyurethanes containing at least one lateral and/or at least one terminal copolymerizable, olefinically unsaturated group, and optionally carrying out partial or complete neutralization,
(a.2) at least one color and/or effect pigment,
(a.3) at least one UV-absorbing pigment, and
(a.4) talc.

2. Process according to Claim 1, **characterized in that** the (co)polymerizable, olefinically unsaturated groups of the (co)monomers (a.1.1) are selected from the group consisting of (meth)acrylate, ethacrylate, crotonate, cinnamate, vinyl, vinyl ether, vinyl ester, dicyclopentadienyl, norbornenyl, isoprenyl, isopropenyl, allyl or butenyl groups, dicyclopentadienyl ether, norbornenyl ether, isoprenyl ether, isopropenyl ether, vinyl ether, allyl ether or butenyl ether groups, or dicyclopentadienyl ester, norbornenyl ester, isoprenyl ester, isopropenyl ester, vinyl ester, allyl ester or butenyl ester groups.

3. Process according to Claim 1 or 2, **characterized in that** the polyurethane (a.1.2) comprises at least one lateral and/or at least one terminal copolymerizable, olefinically unsaturated group.

4. Process according to Claim 3, **characterized in that** the copolymerizable, olefinically unsaturated groups of the polyurethane (a.1.2) are selected from the group consisting of (meth)acrylate, ethacrylate, crotonate, cinnamate, vinyl, vinyl ether, vinyl ester, dicyclopentadienyl, norbornenyl, isoprenyl, isopropenyl, allyl or butenyl groups, dicyclopentadienyl ether, norbornenyl ether, isoprenyl ether, isopropenyl ether, vinyl ether, allyl ether or butenyl ether groups, or dicyclopentadienyl ester, norbornenyl ester, isoprenyl ester, isopropenyl ester, vinyl ester, allyl ester or butenyl ester groups.

5. Process according to Claim 4, **characterized in that** the copolymerizable, olefinically unsaturated groups of the polyurethane (a.1.2) are vinyl groups.

6. Process according to Claim 5, **characterized in that** the vinyl groups of the polyurethane (a.1.2) are contained in ethenylarylene groups.

7. Process according to Claim 6, **characterized in that** the polyurethane (a.1.2) is preparable by
(1) reacting at least one polyurethane prepolymer (a.1.2.1) containing at least one free isocyanate group with
(2) at least one adduct (a.1.2.2) obtainable by reacting at least one ethenylarylene monoisocyanate and at least one compound containing at least two isocyanate-reactive functional groups
with one another such that at least one isocyanate-reactive functional group remains in the adduct (a.1.2.2).

8. Process according to Claim 7, **characterized in that** the isocyanate-reactive functional group is selected from the group consisting of hydroxyl groups, thiol groups and primary and secondary amino groups.

9. Process according to Claim 7 or 8, **characterized in that** the ethenylarylene monoisocyanate has the general formula I:
**CH₂=C (R) -A-X-NCO** (I)
in which the definition of the variables is as follows:
A = substituted or unsubstituted C₆-C₂₀ arylene radical;
R = hydrogen atom, halogen atom, nitrile group or a substituted or unsubstituted alkyl, cycloalkyl, alkylcycloalkyl, cycloalkylalkyl, aryl, alkylaryl, cycloalkylaryl, arylalkyl or arylcycloalkyl radical; and
X = divalent organic radical.

10. Process according to Claim 9, **characterized in that** the arylene radical A is 1,2-, 1,3- and/or 1,4-phenylene, especially 1,3-phenylene.

11. Process according to any of Claims 1 to 10, **characterized in that** the polyurethane (a.1.2) contains hydrophilic functional groups, especially carboxylic acid groups and/or carboxylate groups.

12. Process according to any of Claims 1 to 11, **characterized in that** the color and/or effect pigment (a.2) is selected from the group consisting of organic and inorganic color pigments, optical effect pigments, color and optical effect pigments, magnetically shielding pigments, electrically conductive pigments, anticorrosion pigments, fluorescent pigments, and phosphorescent pigments.

13. Process according to any of Claims 1 to 12, **characterized in that** the UV-absorbing pigment (a.3) is selected from the group consisting of titanium dioxide pigments and carbon black pigments.

14. Process according to Claim 13, **characterized in that** the coating material (A) comprises a titanium dioxide pigment (a.3) and a carbon black pigment (a.3).

15. Process according to any of Claims 1 to 14, **characterized in that** the coating material (A) comprises at least one additive (a.5).

16. Process according to Claim 15, **characterized in that** the additive (a.5) is selected from the group consisting of crosslinking agents, oligomeric and polymeric binders other than the (co)polymers and graft copolymers (a.1), organic and inorganic, chromatic and achromatic, transparent and opaque pigments, fillers, and nanoparticles other than the pigments (a.2) to (a.4), organic solvents, driers, antisettling agents, UV absorbers, light stabilizers, free-radical scavengers, devolatilizers, slip additives, polymerization inhibitors, defoamers, emulsifiers, wetting agents, adhesion promoters, leveling agents, film-forming auxiliaries, rheology control additives, and flame retardants.

17. Process according to any of Claims 1 to 16, **characterized in that** the coating materials (A) and (B) are applied with a wet film thickness such that, after curing, a dry film thickness (A + B) totaling from 10 to 25 µm results.

18. Process according to any of Claims 1 to 17, **characterized in that** the coating material (A) is applied in a wet film thickness such that, after curing, a dry film thickness of from 8 to 12 µm results.

19. Process according to any of Claims 1 to 18, **characterized in that** the coating material (B) is applied with a wet film thickness such that, after curing, a dry film thickness of from 6 to 10 µm results.

20. Process according to any of Claims 1 to 19, **characterized in that** the substrates are bodies of means of transport and parts thereof, buildings and parts thereof, doors, windows, furniture, small industrial parts, mechanical, optical, and electronic components, coils, containers, packaging, hollow glassware, and articles of everyday use.

## Revendications

1. Procédé de préparation de vernis multicouches colorants et/ou à effet sur des substrats, comprenant, superposés dans cet ordre :
(A) au moins un premier vernis colorant et/ou à effet,
(B) au moins un deuxième vernis colorant et/ou à effet, et
(C) au moins un vernis transparent,
par application successive d'au moins un agent de revêtement aqueux durcissable physiquement ou thermiquement (A), d'au moins un agent de revêtement aqueux durcissable thermiquement (B) et d'au moins un agent de revêtement (C) sur
(i) un substrat non amorcé,
(ii) un substrat revêtu avec au moins une amorce non ou seulement partiellement durcie (G)
(iii) un substrat revêtu avec au moins une amorce entièrement durcie (G),
et durcissement commun
(1) des couches humides (A), (B) et (C) résultantes ou
(2) de (A), (B) et (C) et de la ou des amorces (G) non ou seulement partiellement durcies,
**caractérisé en ce que** l'agent de revêtement (A) contient
(a.1) au moins un (co)polymère ou copolymère greffé, pouvant être préparé par (co)polymérisation d'un monomère (a.1.1) contenant au moins un groupe oléfiniquement insaturé (co)polymérisable ou d'au moins deux comonomères (a.1.1) en présence d'au moins un polyuréthane (a.1.2) choisi dans le groupe constitué par les polyuréthanes ne contenant pas de groupes oléfiniquement insaturés copolymérisables et les polyuréthanes contenant au moins un groupe oléfiniquement insaturé copolymérisable latéral et/ou terminal, ainsi qu'éventuellement neutralisation partielle ou totale,
(a.2) au moins un pigment colorant et/ou à effet,
(a.3) au moins un pigment absorbant le rayonnement UV et
(a.4) du talc.

2. Procédé selon la revendication 1, **caractérisé en ce que** les groupes oléfiniquement insaturés (co)polymérisables des (co)monomères (a.1.1) sont choisis dans le groupe constitué par les groupes (méth)acrylate, éthacrylate, crotonate, cinnamate, vinyle, éther de vinyle, ester de vinyle, dicyclopentadiényle, norbornényle, isoprényle, isopropényle, allyle ou butényle ; les groupes éther de dicyclopentadiényle, norbornényle, isoprényle, isopropényle, vinyle, allyle ou butényle ou les groupes ester de dicyclopentadiényle, norbornényle, isoprényle isopropényle, vinyle, allyle ou butényle.

3. Procédé selon l'une quelconque des revendications 1 ou 2, **caractérisé en ce que** le polyuréthane (a.1.2) contient au moins un groupe oléfiniquement insaturé copolymérisable latéral et/ou terminal.

4. Procédé selon la revendication 3, **caractérisé en ce que** les groupes oléfiniquement insaturés copolymérisables du polyuréthane (a.1.2) sont choisis dans le groupe constitué par les groupes (méth)acrylate, éthacrylate, crotonate, cinnamate, vinyle, éther de vinyle, ester de vinyle, dicyclopentadiényle, norbornényle, isoprényle, isopropényle, allyle ou butényle ; les groupes éther de dicyclopentadiényle, norbornényle, isoprényle, isopropényle, vinyle, allyle ou butényle ou les groupes ester de dicyclopentadiényle, norbornényle, isoprényle isopropényle, vinyle, allyle ou butényle.

5. Procédé selon la revendication 4, **caractérisé en ce que** les groupes oléfiniquement insaturés copolymérisables du polyuréthane (a.1.2) sont des groupes vinyle.

6. Procédé selon la revendication 5, **caractérisé en ce que** les groupes vinyle du polyuréthane (a.1.2) sont contenus dans des groupes éthénylarylène.

7. Procédé selon la revendication 6, **caractérisé en ce que** le polyuréthane (a.1.2) peut être préparé par mise en réaction de
(1) au moins un prépolymère de polyuréthane (a.1.2.1) contenant au moins un groupe isocyanate libre avec
(2) au moins un réactif (a.1.2.2) pouvant être obtenu par mise en réaction d'au moins un monoisocyanate d'éthénylarylène et d'au moins un composé contenant au moins deux groupes fonctionnels réactifs avec les isocyanates l'un avec l'autre de manière à ce qu'au moins un groupe fonctionnel réactif avec les isocyanates reste dans le réactif (a.1.2.2).

8. Procédé selon la revendication 7, **caractérisé en ce que** le groupe fonctionnel réactif avec les isocyanates est choisi dans le groupe constitué par les groupes hydroxyle, les groupes thiol et les groupes amino primaires et secondaires.

9. Procédé selon la revendication 7 ou 8, **caractérisé en ce que** le monoisocyanate d'éthénylarylène présente la formule générale I :
CH₂=C(R)-A-X-NCO (I)
dans laquelle les variables ont la signification suivante :
A = un radical arylène en C₆-C₂₀ substitué ou non substitué ;
R = un atome d'hydrogène, un atome d'halogène, un groupe nitrile, un radical alkyle, cycloalkyle, alkylcycloalkyle, cycloalkylalkyle, aryle, alkylaryle, cycloalkylaryle, arylalkyle ou arylcycloalkyle substitué ou non substitué ; et
X = un radical organique bivalent.

10. Procédé selon la revendication 9, **caractérisé en ce que** le radical arylène A est le 1,2-, 1,3- et/ou 1,4-phénylène, notamment le 1,3-phénylène.

11. Procédé selon l'une quelconque des revendications 1 à 10, **caractérisé en ce que** le polyuréthane (a.1.2) contient des groupes fonctionnels hydrophiles, notamment des groupes acide carboxylique et/ou des groupes carboxylate.

12. Procédé selon l'une quelconque des revendications 1 à 11, **caractérisé en ce que** le pigment colorant et/ou à effet (a.2) est choisi dans le groupe constitué par les pigments organiques et inorganiques, colorants, à effet optique, colorants et à effet optique, à écran magnétique, conducteurs électriques, anticorrosion, fluorescents et phosphorescents.

13. Procédé selon l'une quelconque des revendications 1 à 12, **caractérisé en ce que** le pigment absorbant le rayonnement UV (a.3) est choisi dans le groupe constitué par les pigments de dioxyde de titane et les pigments de suie.

14. Procédé selon la revendication 13, **caractérisé en ce que** l'agent de revêtement (A) contient un pigment de dioxyde de titane (a.3) et un pigment de suie (a.3).

15. Procédé selon l'une quelconque des revendications 1 à 14, **caractérisé en ce que** l'agent de revêtement (A) contient au moins un additif (a.5).

16. Procédé selon la revendication 15, **caractérisé en ce que** l'additif (a.5) est choisi dans le groupe constitué par les agents de réticulation, les liants oligomères et polymères différents des (co)polymères et copolymères greffés (a.1), les pigments organiques et inorganiques, colorés et non colorés, transparents, opaques, organiques et inorganiques, différents des pigments (a.2) à (a.4), les charges et les nanoparticules, les solvants organiques, les agents siccatifs, les agents suspenseurs, les absorbeurs d'UV, les agents photoprotecteurs, les capteurs de radicaux, les agents d'aération, les additifs de glissement, les inhibiteurs de polymérisation, les agents antimousse, les émulsifiants, les agents mouillants, les promoteurs d'adhésion, les agents d'écoulement, les adjuvants filmogènes, les additifs rhéologiques et les agents ignifuges.

17. Procédé selon l'une quelconque des revendications 1 à 16, **caractérisé en ce que** les agents de revêtement (A) et (B) sont appliqués en une épaisseur de couche humide qui résulte après le durcissement en une épaisseur de couche sèche (A+B) totale de 10 à 25 µm.

18. Procédé selon l'une quelconque des revendications 1 à 17, **caractérisé en ce que** l'agent de revêtement (A) est appliqué en une épaisseur de couche humide qui résulte après le durcissement en une épaisseur de couche sèche de 8 à 12 µm.

19. Procédé selon l'une quelconque des revendications 1 à 18, **caractérisé en ce que** l'agent de revêtement (B) est appliqué en une épaisseur de couche humide qui résulte après le durcissement en une épaisseur de couche sèche de 6 à 10 µm.

20. Procédé selon l'une quelconque des revendications 1 à 19, **caractérisé en ce que** les substrats sont des carrosseries de moyens de locomotion et leurs parties, des édifices et leurs parties, des portes, des fenêtres, des meubles, des petites pièces industrielles, des composants mécaniques, optiques et électroniques, des bobines, des contenants, des emballages, des corps creux en verre et des articles d'usage courant.
